# EUROPÄISCHE PATENTSCHRIFT

(11) **EP 2 280 462 B1**
(45) Veröffentlichungstag und Bekanntmachung des Hinweises auf die Patenterteilung: **30.08.2017**
(21) Anmeldenummer: 10007720.5
(22) Anmeldetag: 26.07.2010
(51) Int. Cl.: H02G 3/04, H02G 9/04

(54) **Hochwirksame, verlustarme ferromagnetische Verbundabschirmung**
Highly effective, low-loss ferromagnetic compound shielding
Ecran composite ferromagnétique hautement efficace et à faible usure

(30) Priorität: 28.07.2009 DE 102009035064
(43) Veröffentlichungstag der Anmeldung: 02.02.2011
(73) Patentinhaber: nkt cables GmbH & Co. KG, 51061 Köln (DE)
(72) Erfinder: May, Hans-Peter, 51467 Bergisch-Gladbach (DE)
(74) Vertreter: Feder Walter Ebert

(56) Entgegenhaltungen:
- WO-A1-01/93394
- DE-A1- 19 847 123
- DE-U1-202006 016 804
- JP-U- S6 274 445
- US-A1- 2007 144 754

## Beschreibung

Die Erfindung betrifft eine Anordnung, ein Verlegeverfahren für hochwirksame, verlustarme ferromagnetische Verbundabschirmung und das Material der Verbundabschirmung für ein Drehstromsystem bildende Starkstromkabel.

In zunehmendem Maße wird bei der Installation von Starkstromkabeln die Forderung erhoben, niederfrequente äußere Magnetfelder abzuschirmen. Eine magnetische Abschirmung von erdverlegten Drehstromkabeln kann dadurch erreicht werden, dass man die drei Adern des Kabelsystems in ein Rohr aus hochpermeablem Material einzieht, beispielsweise in ein handelsübliches Stahlrohr. Das Wirkungsprinzip besteht darin, dass die geschlossene ferromagnetische Wand des Stahlrohres einen Großteil der magnetischen Feldlinien, die ansonsten im Außenraum verlaufen würden, magnetisch kurzschließt, ihnen aufgrund der hohen relativen Permeabilität des Stahls von etwa 500... 1200 einen "magnetisch hochleitfähigen" Parallelpfad bietet.

In der Schrift WO0193394 A1 wird eine Anordnung als geschlossenes Stahlrohr gezeigt.

Nachteile dieser Anordnung sind:
1) Es sind nur geringe Achsabstände zu realisieren. Wegen des begrenzten Stahlrohr-Durchmessers steigen die Wirbelstrom- und Ummagnetisierungsverluste im Stahlrohr mit Annäherung der Kabel an die Rohrwand extrem an, beispielsweise von weniger als 10 W/m bei dichter Anordnung auf einige 100 W/m bei Annäherung der Kabel an die Stahlwand. Diese geringen Achsabstände vermindern die Strombelastbarkeit.
2) Die genannten Zusatzverluste im Stahlrohr erwärmen den Boden zusätzlich und vermindern damit die Strombelastbarkeit. Zudem sind sie als dauernd anfallende zusätzliche Betriebskosten sehr kostenintensiv.
3) Die Luftpolster in den Kunststoffrohren bewirken hohe zusätzliche Wärmewiderstände und vermindern dadurch die Strombelastbarkeit.
4) Stahlrohre mit den genannten Durchmessern sind sehr kostenintensiv. Hinzu kommen die Kosten für die Kunststoffrohre sowie die umfänglichen Verlege- und Montagearbeiten.

Nachteil eines Stahlrohres zur Abschirmung ist die Tatsache, dass es einerseits aus mechanischen Gründen und zum Zweck der Abschirmung eine große Wanddicke von einigen Millimetern (etwa 4...10 mm) aufweisen muss und dass es andererseits dadurch nicht flexibel ist und in kurzen Rohrabschnitten zusammengeschweißt werden muss. Zudem muss es gegen Korrosion durch die Bodenfeuchte dadurch geschützt werden, dass es außen mit einem Kunststoffmantel und innen meist mit einer Auffüllung aus Beton versehen wird. Eine weitere arbeitstechnische Schwierigkeit besteht darin, dass aus verlegetechnischen Gründen zunächst zusätzlich drei Kunststoffrohre in das Stahlrohr einzuziehen sind, in die anschließend die drei Kabeladern einzeln eingezogen werden können.

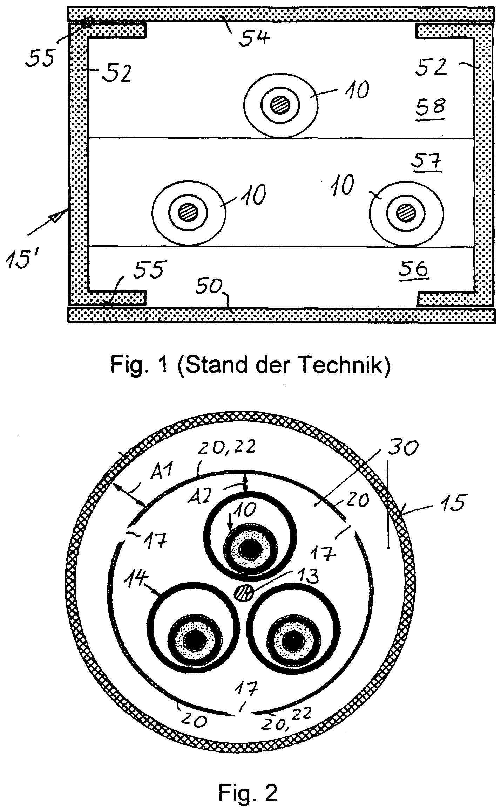

Eine Alternative zum Stahlrohr, die auf demselben Wirkungsprinzip beruht, ist das Erstellen eines geschlossenen, ferromagnetischen Kastens, der die Kabel umschließt. Hierzu sei als beispielhaft als Stand der Technik genannt WO 2005013450 A1 oder WO 2004034539 A1. Ein solcher Kasten kann im Kabelgraben abschnitts- und stückweise aufgebaut werden, indem zunächst Stahlplatten als Bodenplatten ausgelegt werden, auf die dann Winkelstücke als Seitenwände gesetzt werden. Das Einbringen einzelner Beton- (oder Sand-)Schichten erlaubt die Verlegung der Kabeladern in hinreichendem Abstand zu den Stahlwänden. Der Kasten wird durch eine Deckplatte nach oben abgeschlossen. Wichtig sind hierbei die Überlappungsbereiche beim Übergang der einzelnen Abschnitte (Boden-Seitenwand etc.); siehe Fig. 1. Der magnetische Widerstand etwaiger Luftspalte kann auf diese Weise entscheidend verringert werden.

Eine ausführliche Darstellung der Problematik niederfrequenter Magnetfelder wurde von CIGRE (Paris, 2008) veröffentlicht: CIGRE Task Force C4.204; "Mitigation techniques of power-frequency magnetic fields originated from electric power systems", technical brochure.

Vorteile eines Stahlkastens gegenüber der Stahlrohrlösung sind durch den flexiblen, im Graben vorzunehmenden und der Kabelanordnung angepassten Aufbau zu sehen. Problematisch ist der Korrosionsschutz der Stahlteile. Dieser kann beispielsweise durch Verzinken, ggfs. auch als sogenanntes Duplex-System mit einem Farbüberzug über der Zinkschicht erreicht werden. Zusätzlich kann an einen kathodischen Schutz gedacht werden, bei dem die gesamte Stahlkonstruktion mit einer Gleichspannungsquelle auf ein negatives Potential gegenüber einer im Graben liegenden Zink-Opferanode gelegt wird.

Nachteilig ist auch bei der Konstruktion eines Kastens oder eines Einsatzes eines Stahlrohres, dass hohe Zusatzverluste im Stahl durch Wirbelstromverluste und Hystereseverluste auftreten können.

Zur Erzielung hoher Schirmfaktoren und - vor allem bei der Konstruktion nach Fig. 1 - zur langjährigen Beständigkeit gegen Korrosion (bei Berücksichtigung der Abtragrate) werden bei Stahl große Wanddicken von etwa 6 mm bis zu 10 mm erforderlich.

Vielfach wurde darüber nachgedacht, hochpermeable Folien oder Bleche, beispielsweise kornorientierter Stahl einzusetzen, aber auch mü-Metall, magnetische Gläser oder ähnliches zur Schirmung von Einleiterkabeln ist in Betracht gezogen worden (DE 102006013553 B3, US 7241951 B). Die meisten hochpermeablen Materialien sind korrosionsanfällig und bedürfen eines dauerhaften Korrosionsschutzes. Es ist schon vorgeschlagen worden, zum Korrosionsschutz das hochpermeable Material allseitig hermetisch zu umhüllen (DE 19527974 A1).

Eine Anordnung nach DE 20 2006 016 804 U1 besteht aus einem Drehstromkabel welches fabrikmäßig herstellbar ist. Für ein Drehstromsystem auf der Hochspannungsebenen, beispielsweise 400 kV werden die das Drehstromsystem bildende Einleiterkabel so schwer und steif, dass sich ein Drehstromkabel in der Konstruktion nach der DE 20 2006 016 804 U1 nicht herstellen lässt. Das Drehstromsystem kann dann nur (im Kabelgraben, auf der Baustelle) durch das einzelne Einbringen der Einleiterkabel aufgebaut werden.

Ausgehend von bekannten Abschirmanordnungen als Stahlkasten oder als Stahlrohr ist es die Aufgabe der Erfindung, eine Anordnung einer magnetischen Abschirmung und ein Verfahren für einzeln zu verlegende, ein Drehstromsystem bildende Starkstromkabel (Einleiterkabel) anzugeben, welches die vorgenannten Nachteile überwindet.

Die Lösung der Aufgabe findet sich in den nebengeordneten Ansprüchen. Weiterführende, vorteilhafte Ausgestaltungen sind in den jeweiligen Unteransprüchen angegeben.

Die vorliegende Erfindung besteht darin, zunächst eine magnetisch geschlossene Hüllkonstruktion aus normalem, korrosionsgeschützten Stahl um die Einleiterkabel herum aufzubauen, beispielsweise in Form eines Stahlrohres oder eines Stahlkastens. Mit dem hochpermeablen Material werden nun, auf den den Kabeln zugewandten Seiten der Stahlwände, möglichst großen Flächen abgedeckt, - insbesondere solche Flächen, die dicht bei den Kabeln liegen und vom Magnetfeld am stärksten erregt werden. Dabei können sowohl auf der Peripherie einer solchen Abdeckung (d.h. im einzelnen Trassenquerschnitt) als auch in Längsrichtung Lücken zwischen den Abschirmfolien vorhanden sein: wo solche Lücken auftreten, wird der Magnetfluss vom benachbarten Stahl übernommen und weitergeführt, ohne dass der Schirmfaktor verschlechtert wird.

Mit solchen Anordnungen wird nun der Effekt erzielt, in den abgedeckten Stahlwänden die Verluste entscheidend zu verringern, den resultierenden magnetischen Widerstand der ferromagnetischen Abschirmung zu verringern und dadurch gleichzeitig den Abschirmfaktor weiter zu verbessern. Durch die Verlustverringerung kann die Kabelbelastbarkeit gesteigert werden, - im besten Falle nahezu soweit, als wenn keine Abschirmung vorhanden wäre.

Andererseits bietet der Einsatz des hochpermeablen Materials auch die Möglichkeit, bei gleichbleibendem Schirmfaktor die erforderliche Wanddicke der Stahlkonstruktion zu verringern, was große Vorteile nicht nur in den Anlagenkosten, sondern auch in der Handhabung auf der Baustelle (Beherrschung der großen Gewichte!) ermöglicht.

Mit der Erfindung werden vorgenannte Schwierigkeit dadurch überwunden, dass eine Kombination der ferromagnetischen Abschirmhülle (Stahlrohr- oder Stahlkastenlösung) mit Folien oder Blechtafeln eines hochpermeablen Materials vorgenommen wird, wobei dieses hochpermeable Material keine magnetisch geschlossene Kapselung bildet, sondern nur in bestimmten Bereichen an der Abschirmkonstruktion aus Stahl anliegt oder mit geringem Abstand der Stahlhülle benachbart ist. Eine vollständige, lückenlose Kapselung kann jedoch auch vorgesehen sein.

Die Starkstromkabel können mit unterschiedlichen Achsabständen in der Anordnung verlegt sein, wobei unter Berücksichtigung gegenläufiger Effekte, wie Leistungsverluste, Kabelbelastbarkeit und Schirmfaktoren in Bezug auf die Rohr- oder Kasten-Abmessungen optimale Achsabstände ermittelt und gewählt werden.

Die erfindungsgemäße Anordnung zur Magnetfeldabschirmung entlang eines Wechselstrom-Starkstromkabels mit mindestens zwei die Phasenleiter bildenden Kabeladern ist so gebildet, dass die Kabeladern gemeinsam auf ihrer Länge lückenlos mit einer ferromagnetischen Abschirmhülle umgeben sind. Die ferromagnetische Abschirmhülle ist rohrförmig ausgebildet. Sie kann auch in Form eines Kastens mit flachen (flächigen) Wänden ausgebildet sein, wobei die Wände aus Stahlplatten bestehen. Die Einzelteile (bzw. Elemente) der Abschirmhülle sollten elektrisch leitfähig durchgängig verbunden (beispielsweise verschraubt) sein. Zwischen den Kabeladern und der Abschirmhülle ist eine Lage eines hochpermeablen Materials angeordnet, wobei die Lage des hochpermeablen Materials Lücken aufweist, so dass die Kabeladern nur in einer Fläche von 70 bis 95 Prozent umgeben, bzw. geschirmt sind.

Weitere, im Folgenden genannte Merkmale der Erfindung können einzeln oder gemeinsam zusätzlich verwirklicht sein:
Die ferromagnetische Abschirmhülle ist abschnittsweise in Längsrichtung in Einzelelementen unterteilt und verlegt.

Die Kabeladern des Starkstromkabels sind für Hochspannungsebene von beispielsweise 400 kV vorgesehen. Mit zunehmender Spannungsebene nehmen die Kabel an Umfang und Gewicht zu; beispielsweise habe solche Kabeladern einen Durchmesser von ca. 15 cm und ein Gewicht von 30 kg/m und mehr. Solche Kabeladern können wegen ihres großen Gewichts nicht fabrikfertig verseilt oder gebündelt werden. Diese Kabeladern müssen daher auf der Verlegestrecke einzeln in einen Kabelgraben verlegt oder in Leerrohre eingezogen werden. In letzterem Fall kann vorgesehen sein, dass die Kabeladern - einzeln oder gemeinsam - in je ein Kunststoffrohr eingebracht werden. Erfindungsgemäß muss die ferromagnetische Abschirmhülle alle (drei) Kabeladern umschließen. Technische Maßnahmen der ferromagnetischen Abschirmung für verseilte oder gebündelte Kabeladern, die bei Stromkabeln geringerer Spannungsebene bekannt sind (vgl. DE 20 2006 016 804 U1), können für Kabeladern von Starkstromkabeln nicht benutzt werden.

Das hochpermeable Material weist eine magnetische Vorzugsrichtung auf und wird so in der Anordnung verlegt, dass die magnetische Vorzugsrichtung azimutal zu den Kabeladern liegt.

Die Lage des hochpermeablen Materials kann auch aus einer ersten Schicht bestehen , in der die magnetische Vorzugsrichtung azimutal zu den Kabeladern liegt und in einer zweiten Schicht, in der die magnetische Vorzugsrichtung um 90° gedreht ist.

In der Lage des hochpermeablen Materials kann eine dünne Schicht (beispielsweise als Folie) aus elektrisch hochleitfähigem Material auf dem hochpermeablen Material liegend eingebracht sein.

Die Lage des hochpermeablen Materials kann unter Beachtung des Korrosionsschutzes flächig auf der den Kabeladern zugewandten Innenfläche der ferromagnetischen Abschirmhülle aufgebracht sein.

Ergänzend zu den zuvor beschriebenen Ausführungsformen können zusätzlich im Stahlkasten verlegte Kompensationsleiter eine Verbesserung des Anlagenverhaltens bewirken. Alle Kompensationsleiter sind in bestimmten Abständen, beispielsweise an den Muffenstellen, miteinander zu verbinden. Auf diese Weise werden von den Kabelströmen in die Kompensationsleiter hinein Gegenströme induziert, die das Magnetfeld in ihrer Umgebung schwächen und damit das Verbundschirmungssystem entlasten. Der Erfolg dieser Maßnahme ist, dass die Permeabilitäten in der Nähe der Kompensationsleiter durch deren Flußschwächung angehoben werden, d.h. aus der Sättigung herausgenommen werden, was zu einer verbesserten Schirmwirkung der hochpermeablen Abschirmfolien führt.

Die freien Räume in der Anordnung zwischen den Kabeladern und der Abschirmhülle können mit wärmeleitfähigem Zement gefüllt sein.

### Ausführungsformen des hochpermeablen Materials

Als erfindungsgemäß wird weiter das hochpermeable Material zur Verwendung als Magnetfeldabschirmung entlang eines Wechselstrom-Starkstromkabels mit mindestens zwei die Phasenleiter bildenden Kabeladern beansprucht. Hierbei ist das hochpermeable Material zwischen den Kabeladern und der ferromagnetischen Abschirmhülle angeordnet, und als tafelförmiges Flachmaterial (in Form einer Folie oder eines Blechs) ausgebildet. Das Flachmaterial ist in Form von Tafeln unterteilt, wobei die Tafeln mit Abstand aneinander gereiht sind und jede Tafel mit einer Korrosionsschutzschicht feuchtigkeitsundurchlässig ringsum verschlossen ist. Die Korrosionsschutzschicht kann eine Bitumenschicht sein, oder die Tafeln sind ringsum mit Kunststoff kaschiert.

Zwischen den beabstandeten Tafeln ist ein Überlappungsbereich der Korrosionsschutzschicht vorhanden. In diesen Bereichen kann das tafelförmige, mit der Korrosionsschutzschicht verschlossene Flachmaterial geschnitten werden, ohne dass das hochpermeable Material verletzt wird und dabei der Korrosion ausgesetzt wird.

Das tafelförmige Flachmaterial wird in Form eines rechteckigen, langen Bandes hergestellt. Es kann in großen Längen aufgespult und auf der Baustelle wieder abgespult und in größeren Abschnitten am Stück verlegt werden. Mehrere Bänder können auch nebeneinander liegend verschweißt werden und/oder sogar (in Längsrichtung an den Längsrändern) zu einem Schlauch verbunden werden. Ein Schlauch kann dazu benutzt werden, in Röhren oder Bohrungen eingezogen zu werden. Es ist aus der Sanierungstechnik von Kanälen und Wasserröhren bekannt, sogenannte Inliner-Schläuche einzubringen, die mit UV-aushärtbarem Harz getränkt sind. Nach dem Einziehen und Anlegen an die Kanal- oder Röhreninnenwand wird mittels UV-Bestrahlung das Material ausgehärtet und erhält damit dauerhafte Beständigkeit. Dieser Schlauchaufbau mit Material aus UV-aushärtbarem Harz kann auch im vorliegenden Fall mit dem tafelförmigen Flachmaterial verwendet werden.

Als ein weiteres erfindungsgemäßes Prinzip wird eine Stahl-Verbundplatte vorgeschlagen. Bei diesem Prinzip ist die Lage des hochpermeablen Materials auf einer als Wand (Seiten-, Bodenwand, Decke) eines Stahlkastens gebildeten ferromagnetischen Abschirmhülle (korrosionsgeschützt) flächig aufgebracht. Durch die Verwendung solcher Stahl-Verbundplatten liefert die Erfindung den besonderen Vorteil einer einheitlichen Handhabung auf der Baustelle. Mit den Stahl-Verbundplatten entsteht ein Baukastensystem zur aufwandsminimierten, verlustarmen und hochwertigen magnetischen Abschirmung von Einleiterkabeln bei gleichzeitig hohem mechanischen Schutz.

### Verfahrensansprüche

Weiterhin wird ein erfindungsgemäßes Verfahren zur Bildung einer Magnetfeldabschirmung entlang eines Wechselstrom-Starkstromkabels mit mindestens zwei die Phasenleiter bildenden Kabeladern angegeben. Hierbei werden die Kabeladern einzeln in eine auf ihrer Länge lückenlos gebildeten ferromagnetischen Abschirmhülle gelegt, welche abschnittsweise in Längsrichtung in Einzelelementen (auch kürzere oder längere Rohrabschnitte) unterteilt ist, und zwischen den Kabeladern und der Abschirmhülle wird eine Lage eines hochpermeablen Materials angeordnet, welches Lücken aufweist, so dass die Kabeladern nur in einer Fläche von 70 bis 95 Prozent umgeben sind.

Bei dem Verfahren können die Kabeladern in mindestens einem Kunststoffrohr eingebracht werden. Wobei entweder jede Kabelader einzeln in einem Kunststoffrohr zu liegen kommt oder alle Kabeladern in einem größeren Kunststoffrohr gemeinsam angeordnet (eingezogen) werden.

Bei dem Verfahren kann weiterhin die Lage des hochpermeablen Materials als in Richtung der Kabeladern verlaufendes Band verlegt werden und nach Verlegen des Bandes das Band um die Kabeladern herum verschlossen werden. Als alternative Umhüllung der Kabeladern kann bei dem Verfahren ein Schlauch verwendet werden, wobei die Lage des hochpermeablen Materials als in Richtung der Kabeladern verlaufender Schlauch ausgebildet ist und dieser innerhalb eines Kunststoffleerrohres verlegt wird, in welches danach die Kabeladern eingezogen werden.

Die Erfindung wird mit Darstellung von Figuren näher erläutert. Es zeigen die Figuren im Einzelnen:
- Fig. 1:: Ferromagnetischer Kasten zur Schirmung von Einleiterkabeln (Stand der Technik),
- Fig. 2:: Stahlrohranordnung nach der Erfindung,
- Fig. 3:: Ferromagnetischer Kasten mit eingelegten, hochpermeablen Abschirmfolien,
- Fig. 4:: beidseitig korrosionsgeschützte Abschirmfolie in Sandwich-Konstruktion,
- Fig. 5:: beidseitig kaschierte tafelförmige Abschirmfolien,
- Fig. 6:: Verbinden der Überlappungsstellen für ein Band von Abschirmfolien,
- Fig. 7:: Kabel mit Abstützung in Stahlkasten,
- Fig. 8:: Stahlkastenkonstruktion und
- Fig. 9:: Ferromagnetischer Kasten mit eingelegten Kompensationsleitern.

In der Fig. 1 findet sich eine Darstellung eines ferromagnetischen Kastens 15' zur Schirmung von Einleiterkabeln 10, der im Kabelgraben aus Bodenplatte 50, Seitenwänden 52 und Deckplatte 54 aufgebaut wird; Stand der Technik (vgl. WO 2005013450 A1; WO 2004034539 A1). Die magnetisch vollständig geschlossene Kapselung wird durch Überlappungsbereiche 55 in den Ecken des Kastens 15' erreicht. Die Hohlräume sind mit Füllmaterial (Betonlagen 56, 57 und 58) gefüllt.

Die Fig. 2 zeigt eine Stahlrohranordnung 15 nach der Erfindung. Kabeladern 10 liegen in Kunststoffrohren 14, welche mit relativ großem Achsabstand zueinander in das Stahlrohr 15 gelegt sind. Stützelement sind nicht dargestellt. Eine Schicht von Abschirmfolien 20,22 umgibt die Kabeladern mit einem Abstand A2, wobei zwischen Abschirmfolien 20,22 und Innenwand des Stahlrohrs 15 ein anderer Abstand A1 vorhanden ist. Die Abstände A1, A2 sind für die Erfindung nicht wesentlich, wie noch dargestellt wird. Die drei eingelegten Abschirmfolien 20,22 haben untereinander Lücken 17. Die Lückenflächen (in Bezug auf die zylindrische Umhüllung des Starkstromkabels) können zwischen 5 und 30 %, vorzugsweise bei 20 % liegen. Die Hohl- oder Zwischenräume 30 in der Anordnung können mit einem Füllmittel, vorzugsweise hochwärmeleitfähiger Zement gefüllt werden.

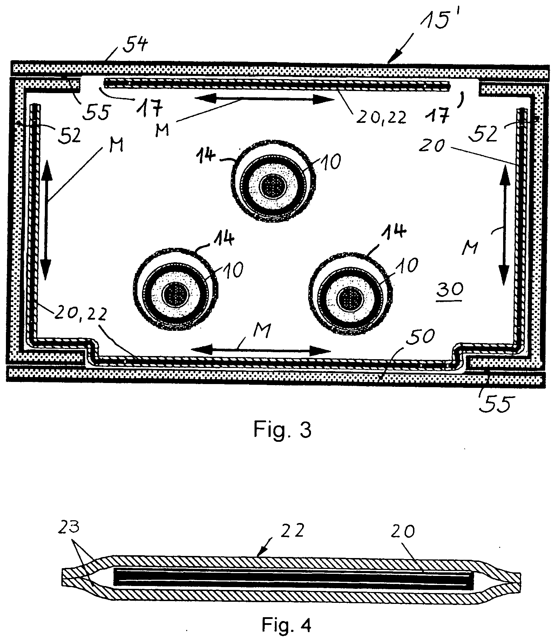

Die Fig. 3 zeigt weitere erfindungsgemäße Ausführungsmöglichkeiten als ferromagnetische Kästen 15'. Rechteckförmige Abschirmfolien 20,22 werden beidseitig korrosionsgeschützt in den Stahlkasten 15' eingebracht, dass sie große Bereiche des Bodens 50, der Seitenwände 52 und der Decke 54 des Stahlkastens innen, d.h. auf der den Kabeln 10 zugewandten Seite, überdecken. Hierbei ist es nicht entscheidend nachteilig, dass zwischen den hochpermeablen Blechen 20,22 Spalte und Lücken 17 vorhanden sind.

Die hochpermeablen Folien 20 oder Bleche sind aus Spezialstahl (my-Metall, metallisches Glas) mit einer relativen Permeabilität von 40.000 herstellbar. Dieser Wert ist um einen Faktor von 40 oder mehr höher als bei normalem Stahl. Die Funktion der Folien besteht darin, dass die außenliegenden Stahlbereiche (50,52,54) vom Magnetfluss entlastet werden, so dass bei gleichzeitiger Verbesserung des Schirmfaktors der Anordnung die Verluste im Stahl überall dort, wo er von den Blechen 20 abgedeckt ist, entscheidend herabgesetzt werden. Die Verluste des hochpermeablen Materials sind im Vergleich zum Stahl nahezu vernachlässigbar gering. Handelt es sich um ein Material mit magnetischer Vorzugsrichtung (z.B. um einen kornorientierten Stahl), so sind die Folien 20 mit ihrer magnetischen Vorzugsrichtung M so zu verlegen, wie in der Fig. 3 gezeigt, nämlich azimutal zu den Kabeln 10 und damit in Richtung der von den Kabeln erzeugten magnetischen Flusslinien.

Wegen ihrer hohen Permeabilität braucht die Dicke solcher Abschirmfolien 20 in vielen Fällen nur einen Bruchteil eines Millimeters zu betragen, um beispielsweise dieselbe Schirmwirkung wie eine 10 mm starke Stahlwand zu erzielen.

Natürlich wird der Schirmfaktor umso größer und die Verluste im Stahlkasten umso geringer, je vollständiger die Stahlflächen abgedeckt werden. In Fig. 3 ist im unteren Bereich die Abschirmfolie auch bis in die Ecken hinein eingebracht. Im oberen Bereich (Übergangsbereich zur Stahl-Deckplatte 54) der Fig. 3 ist die Abschirmfolie in den Ecken ausgespart; dort sind Lücken 17 zwischen den benachbarten Folien-Teilen 20,22 vorhanden.

Die Wirkung von hochpermeablen Abschirmfolien sei am Beispiel eines Stahlrohres (Durchmesser 1000 mm, Wanddicke 10 mm) erläutert. In einer Anordnung, bei der drei Kabeladern - die einen Strom von 1600 A führen - mit einem Achsabstand zueinander von 300 mm in dem Stahlrohr liegen, wird mittels eines Finite-Elemente-Berechnungsprogramms die Permeabilitätsverteilung, d.h. die magnetische Anregung des Stahlrohres durch die Leiterströme berechnet

Für diese Anordnung ergeben sich bei dem genannten Strom insgesamt Verluste von 127 W/m, an denen die Verluste des Stahlrohres einen Anteil von 44 W/m, also von rd. 35 % nehmen. Der Schirmfaktor beträgt rd. 118.

Werden nun bei dieser Konstruktion, wie in Fig. 2, an der Innenseite des Stahlrohres 15 (oder mit Abstand zum Stahlrohr) drei Abschirmfolien 20 symmetrisch so angebracht, dass 5 % bis 30 % (vorzugsweise 20 %) der Stahlrohroberfläche nicht von ihnen abgedeckt werden, so ergibt sich eine verbesserte Permeabilitätsverteilung. In den abgedeckten Bereichen werden praktisch nur die Abschirmfolien 20 magnetisch angeregt und die Stahlwandbereiche dahinter entlastet (d.h. kaum angeregt bzw. kaum vom Magnetfluss durchsetzt).

Ergebnis ist, dass die Verluste des magnetischen Schirmungssystems - also von Stahlrohr und Abschirmfolien zusammen - von 44 W/m auf 9,7 W/m zurückgehen, also auf weniger als ein Viertel reduziert werden. Die Kabelbelastbarkeit steigt hierdurch um nahezu 20 % an. Gleichzeitig erhöht sich der Schirmfaktor der Anordnung von 118 auf 340.

Die Figuren 4, 5 und 6 zeigen den Aufbau von korrosionsgeschützten Abschirmfolien 20. Es werden die Abschirmbleche 20 als einzelne Tafeln oder Folien mit Lücken hinter einander gelegt und beidseitig mit zwei Korrosionsschutzfolien 21 umhüllt. In ihren Überlappungsbereichen 25, 27 (einschließlich der Ränder) werden sie allseitig miteinander verschweißt oder verklebt oder mechanisch verbunden (getackert) (im weiteren auch als Sandwich-Konstruktion bezeichnet). Hierbei kann es sich beispielsweise um bitumenbeschichtete Bänder oder auch um Bänder mit eingelegter Dampfsperre, z.B. einer Aluminiumfolie, handeln.

Die Fig. 4 zeigt die Sandwich-Konstruktion im Schnitt einer beidseitig mit einer Schutzfolie 21 korrosionsgeschützten Abschirmfolie 20.

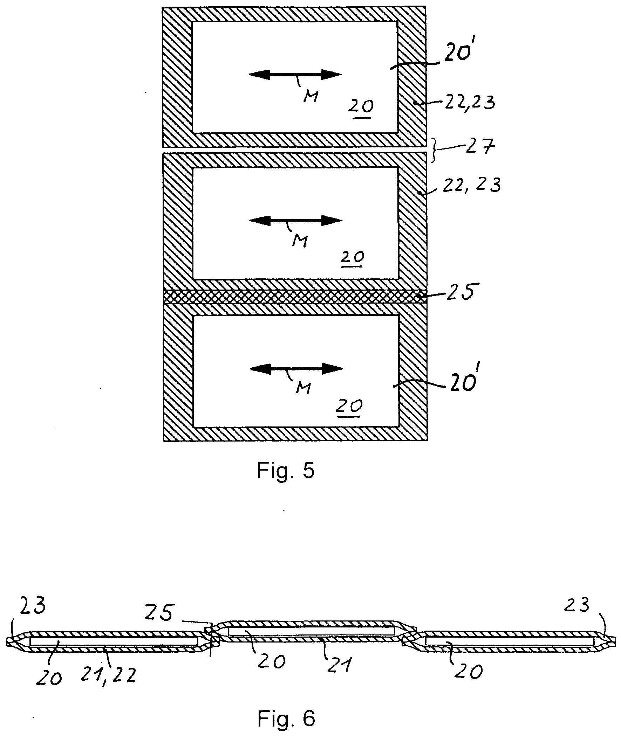

In Fig. 5 ist gezeigt, wie in Längsrichtung hintereinander entlang beidseitig kaschierte Abschirmfolien 22 ausgelegt sind. Zwei Folien in Fig. 5 sind im oberen Bereich der Figur mit Lücke 27 verlegt. Um die Lücken klein zu halten, können die Abschirmfolien natürlich auch überlappend (Bereich 25) ausgelegt werden, wie im unteren Bereich der Figur 5 gezeigt.

Das Prinzip des bandförmigen Anordnens kann auch so umgesetzt werden, dass in einem fortlaufenden Fertigungsprozess auf eine ablaufende untere Schutzhaut 21 in geeigneten Abständen Abschirmfolien 20 aufgelegt werden, um dann eine obere Schutzhaut 21 auflaufen zu lassen und obere und untere Schutzhaut sowohl in den beiden äußeren Überlappungsbereichen (Rand 23) als auch die Überlappungsbereiche 25 zwischen den Abschirmfolien zur Bildung eines endlosen Bandes miteinander zu verkleben oder zu verschweißen. Somit kann hinterher ohne Beschädigung der eingebetteten Abschirmfolien das Band in bestimmten Längen geschnitten oder getrennt werden.

Es gibt weitere Konstruktionsvarianten, um das vorgestellte Prinzip in ein praktisches Schirmungssystem umzusetzen. Eine Möglichkeit ist die Kombination der hochpermeablen Abschirmfolie mit weiteren abschirmenden Elementen. Hier kommt beispielsweise eine zweite Schicht infrage, die aus dem gleichen Material, aber mit einer um 90° gedrehten Vorzugsrichtung M besteht, um Magnetfelder, die nicht nur transversal zum Kabelsystem verlaufen, besser abzuschirmen.

In ein Band aus überlappend gelegten und miteinander befestigten Abschirmfolien können aber auch zwei hochpermeable Folien übereinander, statt einer, eingelegt werden. Dies erhöht den Schimfaktor der Anordnung und vermindert ihre Verluste weiter. Zudem können zwei solcher Bänder übereinander, überlappend, ausgelegt, werden, um die beiden beschriebenen Effekte weiter zu verbessern.

Auch die Kombination mit elektrisch hochleitfähigen Folien, z.B. mit Aluminium- oder Kupferfolien, kommt infrage, um noch höhere Schirmfaktoren zu erzielen.

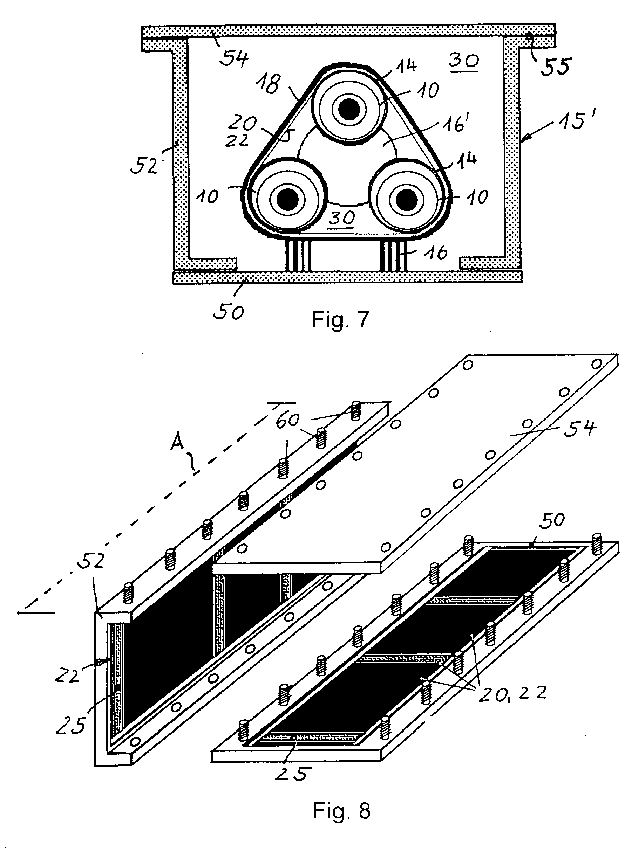

Die Fig. 7 zeigt eine weitere Möglichkeit zur Umhüllung von Kabeladern 10 mit Schirmungsfolie 20,22. In einem Stahlkasten 15' liegen drei auf Abstand mit Halter 16' gehaltene Kabeladern 10. Die hochpermeable Schirmungsfolie 20 wird direkt auf die Kabeladern aufgebracht.

Anstelle eines Kastens nach Fig. 7 kann auch ein Stahlrohr (vgl. Fig. 2) eingesetzt werden. Man geht von einem äußeren Stahlrohr entsprechend großen Durchmessers aus, in das üblicherweise zunächst drei Kunststoffrohre 14 zur späteren Aufnahme der Kabeladern 10 eingezogen werden. Vorschlagsgemäß werden diese drei Kunststoffrohre 14 zunächst in bestimmten longitudinalen Abständen mit Hilfe von Formteilen in dem gewünschten Abstand gehalten und in dieser Position von der Abschirmfolie umhüllt. Der gesamte Verband wird gehalten durch Haltebänder 18, an denen zugleich Abstandshalter als Gleitkufen (oder auch mit kleinen Rollen oder Rädern) zum leichten Einziehen in das Rohr und zur Sicherstellung der gewünschten Abstände der Kabel zur Rohrwand befestigt sind (solche Elemente sind schon im Handel erhältlich).

Nach dem Einziehen werden die Zwischenräume 30 (Innen- und Außenzwickel) sowohl innerhalb wie auch außerhalb der Abschirmfolie mit einem möglichst gut wärmeleitfähigen Beton, optimalerweise mit dem Spezialbeton (beispielsweise Produkt der Firma HeidelbergZement mit λ ≈ 4...6 W/(K m) verfüllt. Auf diese Weise kann erreicht werden, dass die Strombelastbarkeit des Kabelsystems mit magnetischer Schirmung genauso groß oder gar größer ist als ohne die Schirmungsmaßnahme.

Die Fig. 7 zeigt einen Stahlkasten 15' ähnlich wie in Fig. 3. Die Fugen in den Außenecken das Stahlkastens sind mit Flanschen 55 gebildet. Man kann davon Varianten herstellen, indem entweder die oberen (beiden) - wie in Fig. 7 - oder die unteren (beiden) Außenwand-Winkel jeweils für den Überlappungsbereich der horizontalen Platte (50,54) nach außen gerichtet sind. Eine Ausführung mit nach außen gerichteten Außenwand-Winkeln hat den Vorteil, dass die Innenwände des Stahlkastens nicht verspringen und so die Abschirmfolien besser ausgelegt bzw. angebracht werden können.

In der Fig. 8 ist eine Prinzipskizze wiedergegeben, wie ein Stahlkasten im Kabelgraben aus Einzelelementen A aufgebaut ist und aus einzelnen, bereits mit der Abschirmfolie 22 belegten Bereichen (Boden 50, Seitenwände 52, Deckel 54) zusammengesetzt und beispielsweise mit Schrauben 60 miteinander befestigt werden kann. Wie hier in der Kastenkonstruktion können auch Stahlrohrkonstruktionen in Einzelelementen aus Rohrabschnitten (A) gebildet werden. Die Konstruktion nach Fig. 8 - oben schon mit Stahl-Verbundplatte bezeichnet - besteht darin, dass auf eine Stahlplatte (50, 52, 54) (die in der Anordnung außen liegt) - mit geringer Lücke oder auch überlappend - die Abschirmfolien aufgelegt und korrosionsgeschützt mit der Stahlplatte verklebt, bzw. ringsum umlaufend versiegelt (verschweißt). Es entsteht so eine Verbundplatte, die anschließend noch den bei Stahlplatten üblichen Verfahren der Korrosionsschutz-Erstellung, beispielsweise Verzinkung mit anschließendem coating (Duplex-Schutz), unterworfen werden kann.

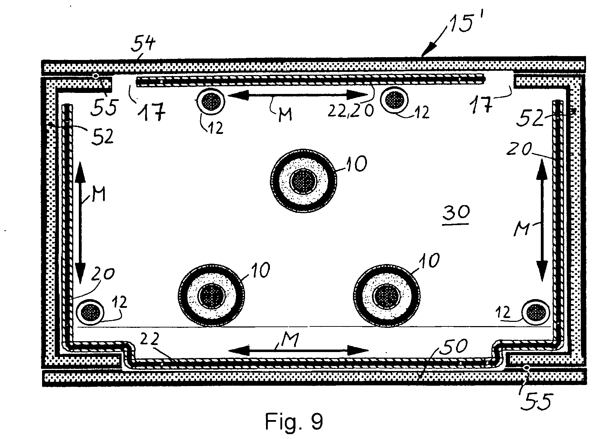

Die Fig. 9 zeigt einen ferromagnetischen Kasten mit eingelegten Kompensationsleitern Drei Kabeladern 10 des Starkstromkabels werden mit relativ großem Achsabstand zueinander in die als Kasten 15' ausgebildete Abschirmhülle mit Wänden in Rechteckanordnung gelegt. Zwei Kabeladern lagern in einer ersten, tieferen Verlegeebene und die dritte Kabelader ist mittig oberhalb der beiden ersten Kabeladern verlegt. Zwei Kompensationsleiter 12 sind in der ersten Verlegeebene direkt neben den senkrechten Seitenwänden 52, sowie zwei Kompensationsleiter 12 rechts und links oberhalb der dritte Kabelader direkt unter dem Kastendeckel 54 angebracht. Um die Kosten niedrig zu halten, bestehen die Kompensationsleiter vorzugsweise aus Aluminium und werden aus Gründen des Korrosionsschutzes mit einer dünnen Isolierhülle umgeben.

### Bezugszeichen

- 10: Kabeladern des Starkstromkabels (z.B. 400 für kV)
- 12: Kompensationsleiter
- 13: Erdleiter
- 14: Kunststoffrohr
- 15: Stahlrohr
- 15': Stahlkasten
- A1, A2: Abstände
- 16, 16': Abstandshalter
- 18: Haltebänder
- 17: Lücke
- 20: Abschirmfolie, -blech
- 20': Tafel der Abschirmfolie
- 21: Schutzhaut, Schutzfolie
- 22: kaschierte Abschirmfolie, -blech
- 23: Randverschluss
- 25: Überlappungsbereich
- 27: Folienlücke
- 30: Füllmittel
- 50: Bodenplatte Kasten
- 52: Seitenwand Kasten
- 54: Deckplatte Kasten
- 55: Fuge, Spalt
- 56: Betonlage unten
- 57: Betonlage Mitte
- 58: Betonlage oben
- 60,61: Schrauben, Schraubenlöcher
- A: Abschnitte
- M: Magnet. Vorzugsrichtung

## Patentansprüche

1. Anordnung zur Magnetfeldabschirmung entlang eines Wechselstrom-Starkstromkabels mit mindestens zwei die Phasenleiter bildenden Kabeladern (10), insbesondere Magnetfeldabschirmung eines erdverlegten Starkstromkabels, wobei die Kabeladern (10) gemeinsam auf ihrer Länge lückenlos mit einer ferromagnetischen Abschirmhülle (15, 15') umgeben sind, und die Abschirmhülle (15, 15') rohr- oder kastenförmig ausgebildet ist, und abschnittsweise in Längsrichtung in Einzelelemente (A) unterteilt ist, **dadurch gekennzeichnet, dass** zwischen den Kabeladern (10) und der Abschirmhülle (15, 15') eine Lage eines hochpermeablen Materials (20, 22) angeordnet ist, und die Lage des hochpermeablen Materials Lücken aufweist, so dass die Kabeladern (10) nur in einer Fläche von 70 bis 95 Prozent umgeben sind.

2. Anordnung nach Anspruch 1, **dadurch gekennzeichnet, dass** die Kabeladern (10) in mindestens einem Kunststoffrohr (14) eingebracht sind.

3. Anordnung nach Anspruch 1 oder 2, **dadurch gekennzeichnet, dass** das hochpermeable Material (20, 22) eine magnetische Vorzugsrichtung (M) aufweist und so in der Anordnung verlegt ist, dass die magnetische Vorzugsrichtung (M) azimutal zu den Kabeladern (10) liegt.

4. Anordnung nach Anspruch 3, **dadurch gekennzeichnet, dass** die Lage des hochpermeablen Materials (20, 22) aus einer ersten Schicht besteht, in der die magnetische Vorzugsrichtung (M) azimutal zu den Kabeladern (10) liegt und in einer zweiten Schicht besteht, in der die magnetische Vorzugsrichtung (M) um 90° gedreht ist.

5. Anordnung nach einem der vorhergehenden Ansprüche, **dadurch gekennzeichnet, dass** in der Lage des hochpermeablen Materials (20, 22) eine Schicht aus elektrisch hochleitfähigem Material auf dem hochpermeablen Material liegend eingebracht ist.

6. Anordnung nach einem der vorhergehenden Ansprüche, **dadurch gekennzeichnet, dass** die Lage des hochpermeablen Materials (20, 22) flächig auf der den Kabeladern zugewandten Innenfläche der ferromagnetischen Abschirmhülle (15') aufgebracht ist.

7. Anordnung nach einem der vorhergehenden Ansprüche, **dadurch gekennzeichnet, dass** drei Kabeladern (10) mit relativ großem Achsabstand zueinander in einen als Kasten (15') ausgebildeten Abschirmhülle mit Wänden (50, 52, 54) in Rechteckanordnung so gelegt sind, dass zwei Kabeladern (10) in einer ersten, tieferen Verlegeebene lagern und die dritte Kabelader (10) mittig oberhalb der beiden ersten Kabeladern (10) verlegt ist, wobei zwei Kompensationsleiter (12) in der ersten Verlegeebene direkt neben den senkrechten Seitenwänden (52), sowie zwei Kompensationsleiter (12) rechts und links oberhalb der dritte Kabelader (10) direkt unter dem Kastendeckel (54) angebracht sind.

8. Anordnung nach einem der vorhergehenden Ansprüche, **dadurch gekennzeichnet, dass** offene Räume (30) in der Anordnung zwischen den Kabeladern (10) und der Abschirmhülle (15, 15') mit wärmeleitfähigem Zement (30) gefüllt sind.

9. Verfahren zur Bildung einer Magnetfeldabschirmung entlang eines Wechselstrom-Starkstromkabels mit mindestens zwei die Phasenleiter bildenden Kabeladern (10), insbesondere zur Bildung einer Magnetfeldabschirmung eines erdverlegten Starkstromkabels, wobei die Kabeladern (10) einzeln in eine auf ihrer Länge lückenlos gebildeten ferromagnetischen, rohr- oder kastenförmig ausgebildeten Abschirmhülle (15, 15') gelegt werden, welche abschnittsweise in Längsrichtung in Einzelelemente (A) unterteilt ist, **dadurch gekennzeichnet, dass** zwischen den Kabeladern (10) und der Abschirmhülle (15, 15') eine Lage eines hochpermeablen Materials (20, 22) angeordnet wird, welches die Kabeladern (10) nur in einer Fläche von 70 bis 95 Prozent umgibt.

10. Verfahren nach dem vorhergehenden Anspruch, **dadurch gekennzeichnet, dass** die Kabeladern (10) in mindestens ein Kunststoffrohr (14) eingebracht werden.

11. Verfahren nach den vorhergehenden Ansprüchen 9 oder 10, **dadurch gekennzeichnet, dass** die Lage des hochpermeablen Materials (20, 22) als in Richtung der Kabeladern (10) verlaufendes Band verlegt wird und nach Verlegen des Bandes das Band um die Kabeladern herum verschlossen wird.

12. Verfahren nach den vorhergehenden Ansprüchen 9 bis 11, **dadurch gekennzeichnet, dass** die Lage des hochpermeablen Materials (20, 22) als in Richtung der Kabeladern (10) verlaufender Schlauch innerhalb eines Kunststoffleerrohres (14) verlegt wird, in welches die Kabeladern (10) eingezogen werden.

## Claims

1. Arrangement for magnetic field shielding along an alternating-current power cable with at least two cable cores (10) forming the phase conductors, in particular magnetic field shielding of a buried power cable, the cable cores (10) being surrounded together over their length uninterruptedly by a ferromagnetic shielding casing (15, 15') and the shielding casing (15, 15') being designed in the form of a tube or box, and in certain portions being subdivided in the longitudinal direction into individual elements (A), **characterized in that** a layer of a highly permeable material (20, 22) is arranged between the cable cores (10) and the shielding casing (15, 15'), and the layer of highly permeable material has gaps, so that the cable cores (10) are surrounded only over a surface area of 70 to 95 percent.

2. Arrangement according to Claim 1, **characterized in that** the cable cores (10) are incorporated in at least one plastic tube (14).

3. Arrangement according to Claim 1 or 2, **characterized in that** the highly permeable material (20, 22) has a magnetic preferential direction (M) and is laid in the arrangement in such a way that the magnetic preferential direction (M) lies azimuthally in relation to the cable cores (10).

4. Arrangement according to Claim 3, **characterized in that** the layer of highly permeable material (20, 22) consists of a first layer, in which the magnetic preferential direction (M) lies azimuthally in relation to the cable cores (10), and a second layer, in which the magnetic preferential direction (M) is rotated by 90°.

5. Arrangement according to one of the preceding claims, **characterized in that** in the layer of highly permeable material (20, 22) a layer of electrically highly conductive material is incorporated, lying on the highly permeable material.

6. Arrangement according to one of the preceding claims, **characterized in that** the layer of highly permeable material (20, 22) is applied planar over the inner surface area of the ferromagnetic shielding casing (15') that is facing the cable cores.

7. Arrangement according to one of the preceding claims, **characterized in that** three cable cores (10) are laid with a relatively great axial spacing in relation to one another in a shielding casing formed as a box (15') with walls (50, 52, 54) in a rectangular arrangement in such a way that two cable cores (10) are situated in a first, lower laying plane and the third cable core (10) is laid centrally above the two first cable cores (10), two compensating conductors (12) being provided in the first laying plane directly alongside the vertical side walls (52), and two compensating conductors (12) being provided to the right and left above the third cable core (10) directly under the box cover (54).

8. Arrangement according to one of the preceding claims, **characterized in that** open spaces (30) in the arrangement between the cable cores (10) and the shielding casing (15, 15') are filled with thermally conductive cement (30).

9. Method for forming a magnetic field shielding along an alternating-current power cable with at least two cable cores (10) forming the phase conductors, in particular for forming a magnetic field shielding of a buried power cable, the cable cores (10) being laid individually in a ferromagnetic shielding casing (15, 15') formed uninterruptedly over their length and designed in the form of a tube or box, which in certain portions is subdivided in the longitudinal direction into individual elements (A), **characterized in that** a layer of a highly permeable material (20, 22) is arranged between the cable cores (10) and the shielding casing (15, 15'), surrounding the cable cores (10) only over a surface area of 70 to 95 percent.

10. Method according to the preceding claim, **characterized in that** the cable cores (10) are incorporated in at least one plastic tube (14).

11. Method according to either of the preceding Claims 9 or 10, **characterized in that** the layer of highly permeable material (20, 22) is laid as a strip running in the direction of the cable cores (10) and, after laying the strip, the strip is sealed around the cable cores.

12. Method according to preceding Claims 9 to 11, **characterized in that** the layer of highly permeable material (20, 22) is laid as a tubular formation running in the direction of the cable cores (10) inside an empty plastic tube (14) into which the cable cores (10) are drawn.

## Revendications

1. Agencement de blindage de protection contre un champ magnétique le long d'un câble pour courants forts en courant alternatif avec au moins deux conducteurs de câble (10) formant les conducteurs de phase, en particulier blindage de protection contre un champ magnétique d'un câble pour courants forts souterrain, dans lequel les conducteurs de câble (10) sont entourés ensemble sur leur longueur sans interruption par une gaine de protection ferromagnétique (15, 15'), et la gaine de protection (15, 15') est réalisée en forme de tube ou de caisson, et est divisée localement dans la direction longitudinale en éléments individuels (A), **caractérisé en ce qu'**une couche d'un matériau hautement perméable (20, 22) est disposée entre les conducteurs de câble (10) et la gaine de protection (15, 15'), et la couche du matériau hautement perméable présente des espaces, de telle manière que les conducteurs de câble (10) ne soient entourés que sur une surface de 70 à 95 pour cent.

2. Agencement selon la revendication 1, **caractérisé en ce que** les conducteurs de câble (10) sont introduits dans au moins un tube en matière plastique (14).

3. Agencement selon la revendication 1 ou 2, **caractérisé en ce que** le matériau hautement perméable (20, 22) présente une direction préférentielle magnétique (M) et est posé dans l'agencement de telle manière que la direction préférentielle magnétique (M) se trouve en position azimutale par rapport aux conducteurs de câble (10).

4. Agencement selon la revendication 3, **caractérisé en ce que** la couche du matériau hautement perméable (20, 22) se compose d'une première couche, dans laquelle la direction préférentielle magnétique (M) se trouve en position azimutale par rapport aux conducteurs de câble (10), et d'une seconde couche, dans laquelle la direction préférentielle magnétique (M) est tournée de 90°.

5. Agencement selon l'une quelconque des revendications précédentes, **caractérisé en ce qu'**une couche de matériau hautement conducteur de l'électricité reposant sur le matériau hautement perméable est introduite dans la couche du matériau hautement perméable (20, 22).

6. Agencement selon l'une quelconque des revendications précédentes, **caractérisé en ce que** la couche du matériau hautement perméable (20, 22) est déposée à plat sur la face intérieure de la gaine de protection ferromagnétique (15') tournée vers les conducteurs de câble.

7. Agencement selon l'une quelconque des revendications précédentes, **caractérisé en ce que** trois conducteurs de câble (10) sont posés avec une distance des axes relativement grande l'un par rapport à l'autre sont posés dans une gaine de protection réalisée en forme de caisson (15') avec des parois (50, 52, 54) en agencement rectangulaire, de telle manière que deux conducteurs de câble (10) soient placés dans un premier plan de pose plus profond et que le troisième conducteur de câble (10) soit posé au milieu au-dessus des deux premiers conducteurs de câble (10), dans lequel deux conducteurs de compensation (12) sont placés dans le premier plan de pose directement à côté des parois latérales verticales (52), et deux conducteurs de compensation (12) sont placés à droite et à gauche au-dessus du troisième conducteur de câble (10) directement en dessous du couvercle de caisson (54).

8. Agencement selon l'une quelconque des revendications précédentes, **caractérisé en ce que** des espaces ouverts (30) dans l'agencement entre les conducteurs de câble (10) et la gaine de protection (15, 15') sont remplis de ciment conducteur de la chaleur (30).

9. Procédé pour former un blindage de protection contre un champ magnétique le long d'un câble pour courants forts en courant alternatif avec au moins deux conducteurs de câble (10) formant les conducteurs de phase, en particulier pour former un blindage de protection contre un champ magnétique d'un câble pour courants forts souterrain, dans lequel on pose les conducteurs de câble (10) individuellement dans une gaine de protection ferromagnétique (15, 15'), formée sans interruption sur sa longueur et réalisée en forme de tube ou de caisson, qui est divisée localement en direction longitudinale en éléments individuels (A), **caractérisé en ce que** l'on dispose entre les conducteurs de câble (10) et la gaine de protection (15, 15') une couche d'un matériau hautement perméable (20, 22), qui entoure les conducteurs de câble (10) seulement sur une surface de 70 à 95 pour cent.

10. Procédé selon la revendication précédente, **caractérisé en ce que** l'on introduit les conducteurs de câble (10) dans au moins un tube en matière plastique (14).

11. Procédé selon les revendications précédentes 9 ou 10, **caractérisé en ce que** l'on pose la couche du matériau hautement perméable (20, 22) sous la forme d'une bande s'étendant dans la direction des conducteurs de câble (10) et après la pose de la bande on referme la bande autour des conducteurs de câble.

12. Procédé selon les revendications précédentes 9 à 11, **caractérisé en ce que** l'on pose la couche du matériau hautement perméable (20, 22) sous la forme d'un tuyau souple s'étendant dans la direction des conducteurs de câble (10) à l'intérieur d'un tube vide en matière plastique (14), dans lequel on tire les conducteurs de câble (10).
